# EUROPEAN PATENT SPECIFICATION

(11) **EP 1 578 237 B1**
(45) Date of publication and mention of the grant of the patent: **31.05.2006**
(21) Application number: 03786120.0
(22) Date of filing: 16.12.2003
(51) Int. Cl.: A47J 36/24

(54) **A HEATING DEVICE FOR A FEEDING BOTTLE**
WÄRMVORRICHTUNG FÜR EINE SAUGFLASCHE
DISPOSITIF DE CHAUFFAGE D'UN BIBERON

(30) Priority: 17.12.2002 GB 0229302
(43) Date of publication of application: 28.09.2005
(73) Proprietor: Dream Innovations Limited, Dunfermline Fife KY11 8ES (GB)
(72) Inventor: Anderson, Keith John, Dunfermline, Fife KY11 8ES (GB)
(74) Representative: Newell, Campbell
(86) International application number: PCT/GB2003/005476
(87) International publication number: WO 2004/054414

(56) References cited:
- FR-A- 2 758 808
- US-A- 5 397 031

## Description

The present invention relates to a device suitable for use with, but not exclusively, an infant's feeding bottle, for heating a flow of liquid at storage temperature, passing through the device, to a temperature acceptable for drinking by an infant. The invention also relates to a drinking vessel, particularly an infant's feeding bottle.

Document US-A-5 397 031 discloses a device according to the preamble of independent claim 1.

The methods presently used for heating pre-prepared liquid drinks or feeds for an infant, such as heating in a microwave; standing in a pan of boiling water; or conventional baby bottle warmer have a number of disadvantages; the need for an external heat and power source is often an inconvenience, for example when the baby requires feeding away from home; overheating the liquid can occur, requiring the liquid to be cooled or discarded; the temperature of the liquid will reduce as the baby feeds, possibly dropping below the temperature the infant finds acceptable for feeding; heating the liquid takes time, if the baby is hungry this can lead to the baby becoming stressed.

These methods of heating have a further disadvantage in that they require heating the entire volume of liquid that has been pre-prepared; as the quantity of liquid the baby is likely to drink is unpredictable and some liquids, such as milk particularly breast milk, are not suitable for repeated reheating, unfinished liquid may need to be discarded.

It is an object of the present invention to avoid or minimise one or more of the above disadvantages.

The present invention provides a heating device, adapted for use with a drinking vessel suitable for containing a fluid, for example an infant's feeding bottle, according to independent claim 1.

The present invention provides, in a second aspect, a drinking system for an infant, to provide an infant with a liquid feed at an acceptable consumption temperature, according to independent claim 16.

Preferred embodiments of the invention are disclosed in dependent claims 2-14.

By virtue of the present invention an infant may be provided with a liquid feed on demand at a temperature acceptable for consumption without needing to first heat the whole body of the liquid feed in a microwave or pan of boiling water, resulting in less wastage of liquid feed and reduced stress for the infant.

Embodiments of the invention will now be described by way of example, with reference to the accompanying drawings in which:
Figure 1 is a partially cut away perspective view of a device suitable for use with an infant's feeding bottle, for heating a flow of liquid according to an embodiment of an aspect of the present invention;
Figure 2 is a cross section taken through plane A-A shown on Figure 1;
Figure 3 is a side view of a feeding system for an infant, to provide an infant with a liquid feed at an acceptable consumption temperature, with the device shown in Fig. 1;
Figure 4 is an exploded view of the feeding system of Figure 3;
Figure 5 is an exploded perspective view of a device suitable for use with an infant's feeding bottle, for heating a flow of liquid according to an alternative embodiment of an aspect of the present invention;
Figure 6 is a cross-section taken through plane A-A shown on Figure 5 of the device when assembled;
Figure 7(a) is a side view of the non-return valve of Figure 6 slightly open;
Figure 7(b) is a side view of the non-return valve of Figure 7(a) in a closed position;
Figure 7(c) is a rear view of the non-return valve of Figure 7(b); and
Figure 8 is a perspective view of a feeding system for an infant to provide an infant with a liquid feed at an acceptable consumption temperature incorporating the device shown in Figures 5 and 6.

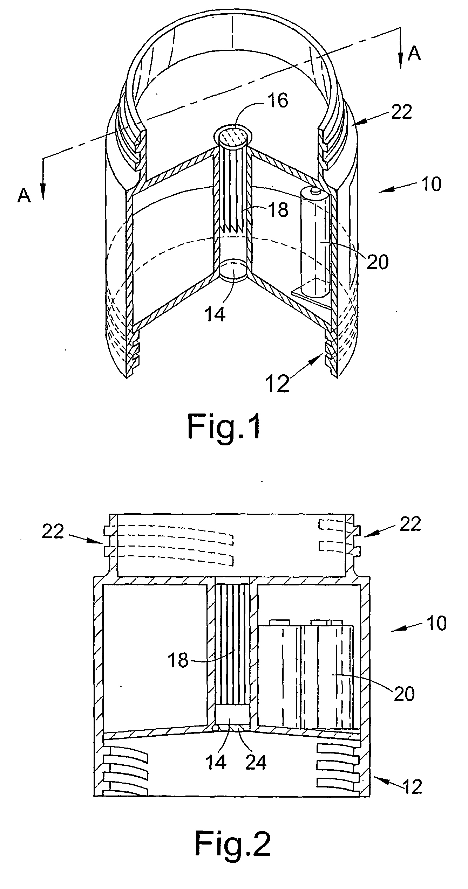

Referring to Figures 1 and 2, there is shown a partially cut away perspective view of a heating device suitable for use with an infant's feeding bottle, generally indicated by reference numeral 10, for heating a flow of liquid (Figure 1) and a cross section taken through plane A-A shown on Figure 2. The device includes a screw thread portion 12 for coupling the device to a vessel (not shown), an inlet 14 for receiving a flow of fluid from a vessel and an outlet 16 for allowing a flow of fluid to leave the device. The heating device 10 also includes heater elements 18 to elevate the temperature of a flow of fluid passing between the inlet 14 and the outlet 16. The heater elements 18 are powered by a rechargeable battery 20 mounted within the device. A second threaded portion 22 is also provided to allow a teat (not shown) to be coupled to the device. The device also includes a non-return valve, in the form of a flap 24 to prevent fluid that has passed through the inlet 14 from returning to the vessel.

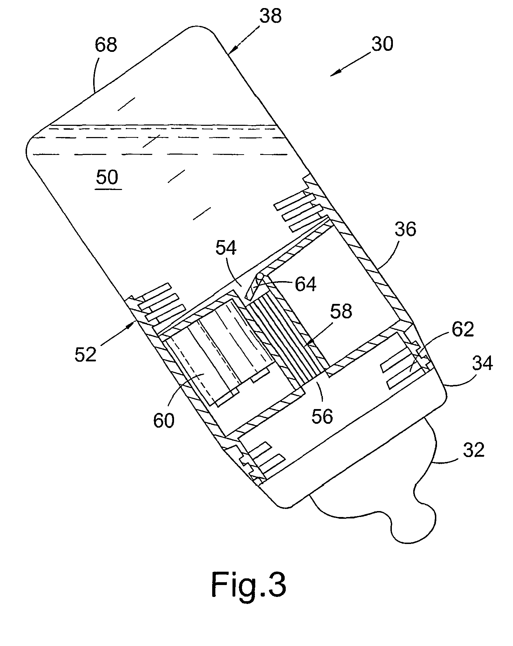

Referring to Figure 3, there is shown a side view of a feeding system, generally indicated by reference numeral 30, for an infant, to provide an infant with a liquid feed at an acceptable consumption temperature, with the device for heating a flow of liquid shown in cross section. The feeding system (shown in an inclined orientation) includes a vessel 38, with a base 68, containing a liquid feed 50 at storage temperature, a heating device 36 for elevating the temperature of the liquid feed 50 from the storage temperature to an acceptable consumption temperature, a teat 32 and a collar 34 to couple the device 36 with the teat 32.

The device includes a threaded portion for releasably coupling 52 the device 36 to the vessel 38, an inlet 54 for receiving the liquid feed 50 from the vessel 38, an outlet 56 for allowing the liquid feed to pass to the teat 32. The device also includes a heater element 58 to elevate the temperature of a flow of fluid passing between the inlet 54 and the outlet 56. The heater element 58 is powered by a rechargeable battery 60. A second threaded portion 62 is also provided to allow the teat 32 to be coupled to the device 36 by the collar 34. The device also includes a non-return, in the form of a flap 64 to prevent fluid that has passed through the inlet 54 from returning to the vessel. With the feeding system shown in an inverted orientation, it will be appreciated that such an orientation, in use, will be common for feeding an infant. The weight of the liquid feed 50 opens the flap 64 and creates a flow of liquid feed 50 through the device 36 to the teat 32. When the feeding system 30 is reverted to a normal upright orientation, allowing it to stand on its base 68, the flap 64 will close preventing any of the heated liquid feed from returning to the liquid feed 50, still at storage temperature, in the vessel 38.

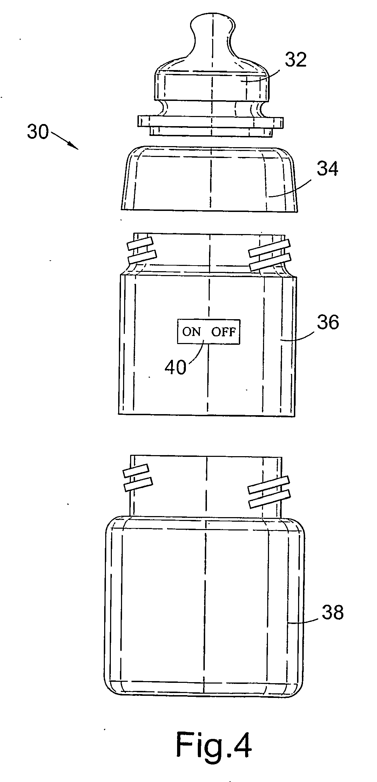

Referring to Figure 4, there is shown is an exploded view of the feeding system of Figure 3, generally indicated by reference numeral 30, for an infant, to provide an infant with a liquid feed at an acceptable consumption temperature. The feeding system includes a teat 32, a collar 34, a device 36 for heating a flow of liquid at storage temperature, passing through the device, to a temperature acceptable for drinking by an infant, and a vessel 38 for storing a liquid feed at a storage temperature. The collar 34 couples the teat 32 to the heating device 36. The heating device 36 includes an on/off switch 40 to activate the heating elements (not shown).

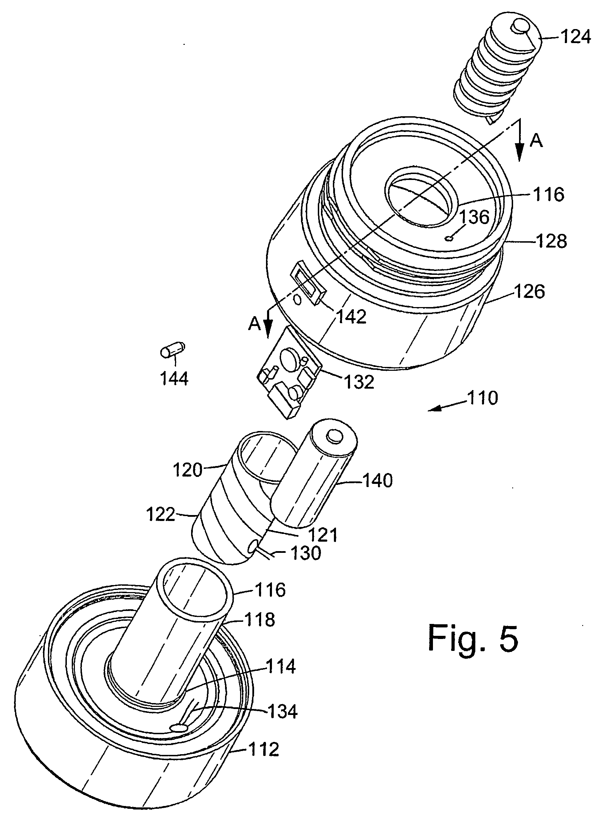

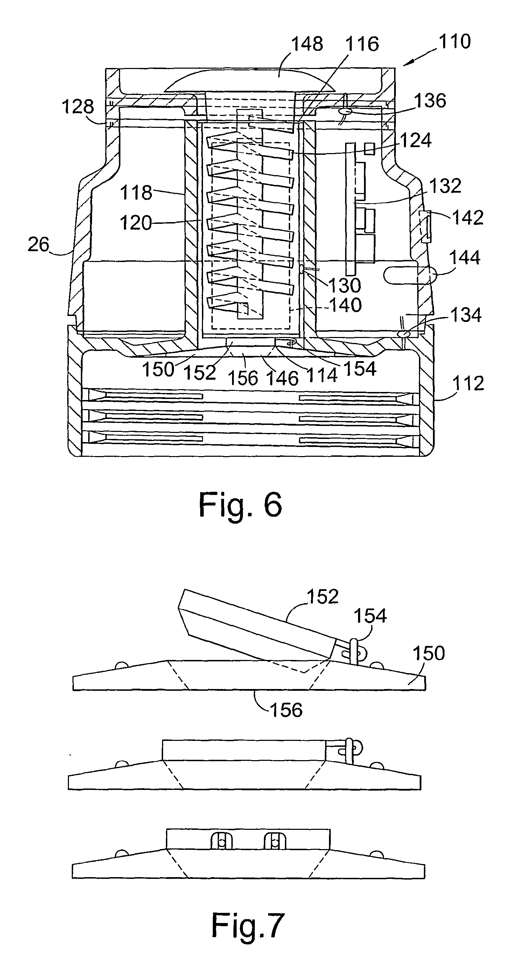

Referring to Figure 5 there is shown an exploded perspective view of a device suitable for use with an infant's feeding bottle generally indicated by reference numeral 110 for heating a flow of liquid and to Figure 6 a cross section taken through plane A-A shown on Figure 5. The device 110 includes a screw thread portion 112 for coupling the device 110 to a vessel (not shown), an inlet 114 for receiving a flow of liquid from a vessel, and an outlet 116 for allowing a flow of liquid to leave the device 110. The inlet 114 and the outlet 116 are connected by a fixed polymer tube 118 into which a heated sheath 120 is inserted. The heated sheath 120 is heated by means of a wrap around wire type heater 122 and the fixed polymer tube 118 insulates the external surface 121 of the heated sheath 120. Inserted into the heated sheath 120 is a helix 124 made from a highly conductive polymer or a metal coated highly conductive polymer or a ceramic). The helix 124 forms an interference fit with the heated sheath 120 and heat generated in the heated sheath 120 passes by conduction through the helix 124. In use the helix 124 will control the flow of the liquid through the device 110 and, as it is heated, will improve the heating capabilities of the device 110. The helix 124 is removable for cleaning and is reusable.

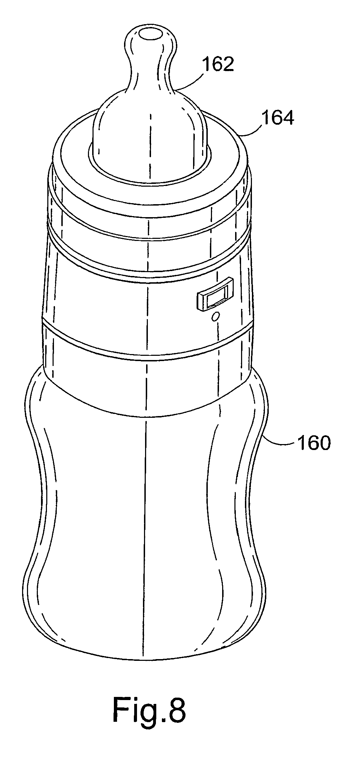

The helix 124, the heated sheath 120, and the fixed polymer tube 118 are all enclosed within a casing 126, which clips to the screw thread portion 112 and in turn has a screw thread 128 for attaching a conventional infant's teat and threaded teat support (as shown in Figure 8). The casing 126 is also insulated to prevent heat loss from the device 110.

A thermistor 130 is attached to the heated sheath 120 to measure the sheath 120 temperature. This temperature reading is fed back to a PCB 132 which regulates the heated wrap around wires 122. The screw thread portion 112 also includes a thermistor 134 to measure the temperature of the liquid in the vessel (not shown), and the casing 126 includes a further thermistor 136 to measure the temperature of the liquid that has passed through the heated sheath 120. Information from the thermistors 134 and 136 is also passed to the PCB 132, which evaluates the temperatures in each area and can raise or reduce the temperature of the heated sheath 120 accordingly.

The PCB 132 further includes a bimetallic strip as a safety device to monitor the temperature inside the device 110. In the event of the thermistors 130, 134, 136 malfunctioning and the interior temperature rising to a dangerous level the bimetallic strip will disconnect the heated wires 122 from the battery 140. The battery 140 is rechargeable and is housed with the PCB 132 in the annulus defined by the casing 126 and the fixed polymer tube 118. The battery is recharged by a recharge circuit on the PCB 132, which charges the battery 140 when the device 110 is connected to a mains supply.

The device 110 is activated by pressing an on-off switch 142 and is also provided with an LED 144 which indicates the device 110 is operating.

The LED 144 has the additional benefit of providing some illumination during nighttime feeding of an infant. The device 110 also includes a temperature control dial (not shown) which is linked to the PCB 132 to control the temperature of the liquid feed to allow for user preferences. The helix 124 is held in place by a one way valve 146 (shown in Figure 2) on the inlet 114 and a cap 148 (also shown on Figure 2) on the outlet 116. Additionally the caps serves to hold in the helix. The purpose of the one way valve 146 is to avoid heated liquid returning to the vessel (not shown) from the heated sheath 120. This ensures the unheated liquid in the vessel can be kept at a sufficiently low temperature to stifle bacteria growth and reduce wastage.

Referring to Figures 7(a), (b), (c), which show side and rear views of the non return valve 146, the valve 146 comprises a base 150 and a lid 152, the lid 152 being connected to the base by a hinge 154. The lid 152 will pivot about the hinge 154 under its own weight, so when the device is upright the lid 152 will seal the aperture 156 in the base 150 as shown in Figure 7(b). However, if the device is tilted the lid 152 will pivot away from the base 150 (as shown in Figure 7(a)) thereby opening the aperture 156 and allowing fluid to pass through the aperture 156.

Returning to Figures 5 and 6 the device 110 further includes a tilt switch, which switches the device 110 off after a set time of being vertical.

Referring now to Figure 8, there is shown a perspective view of an infant feeding system to provide an infant with a liquid feed at an acceptable consumption temperature fitted with the heating device 110. It can be seen from Figure 8 that the device 110 has been connected to a vessel 160 using the screw thread portion 112. A teat 162, and a threaded teat support 164 are connected to the casing 126.

Various modifications and improvements may be made to the embodiments hereinbefore described without departing from the scope of the invention.

For example, although the disclosed embodiments use a rechargeable battery as the power source for the heater elements, the skilled man would understand a disposable battery could be used or an alternative power of heat generation such as mains power or an exothermic chemical reaction could be used. Similarly, if a battery is used, it does not necessarily need to be stored in the annulus between the fixed polymer tube and the casing, the entire infant feeding system could be in the form of a flask with the battery housed in the base section of the flask below the vessel for storing the feed. In this example connecting the device to the vessel would complete the heating circuit with the battery.

Furthermore, although the non return valve in both embodiments opens and closes under its own weight it could also be in the form of a float or ball.

Furthermore, additional functionality could be added to the system such as a liquid crystal display to present information such as battery life, temperature of liquid or duration of feed.

If a rechargeable battery is preferred it could be recharged by placing the device on a charger stand or connecting to a car cigarette lighter socket.

The helix described in the specific description is removable and reusable after cleaning. The skilled man would understand the helix could be disposable and indeed may be manufactured and sold in a sterile polymer sheath or tube for insertion into the heated sheath 120. Additionally, the helix described in the specific description is only one example of a possible configuration of helix. As the helical path of the helix also controls the flow of liquid through the device, an alternative configuration, with an increased or decreased number of turns over the same length will give a different flow rate of liquid for a given applied suction or force. Other shaped inserts could be used other than a helix to perform the same function.

The heating means described with reference to the figures is heating elements or a wrap around wire. Alternatively the device could be heated by an exothermic chemical reaction or the heated sheath could be coated in a conductive spray and a 'wire' like arrangement etched out to create resistance and produce heat.

The device may be provided with a small pump formed and arranged to pump liquid through the heating means to the teat

## Claims

1. A heating device (10,36,110), adapted for use with a drinking vessel suitable for containing a fluid, for example an infant's feeding bottle, the device (10,36,110) including:
means (12,112) for releasably connecting the device (10,110) to a vessel, so as to be in fluid communication therewith;
inlet means (14,114) for receiving, in use, a flow of fluid from a vessel;
outlet means (16,116), for allowing, in use, a flow of fluid to leave the device (10,36,110), the outlet means (16,116) being in fluid communication with the inlet means (14,114); and
means (18,122) for heating a fluid, in use of the device (10,36,110), as it flows between the inlet means (14,114) and outlet means (16,116); **characterised in that** said device comprises non-return means (64,146) formed and arranged to prevent fluid that has passed through the inlet means (14,114) from returning to a said vessel,
whereby, in use, a flow of fluid from a vessel flows through the device (10,36,110) from the inlet means (14,114) to the outlet means (16,116) and leaves the device (10,36,110) through the outlet means (16,116) at an elevated temperature, and is prevented by said non-return means (64, 146) from returning to a said vessel.

2. A heating device (10,36,110) as claimed in claim 1, wherein the device (10,36,110) includes a non-return means on the outlet means (16,116) to prevent fluid returning and coming into contact with the heating means (18,122).

3. A heating device (10,36,110) as claimed in any preceding claim, wherein the means for heating (18,122) a said flow of fluid as it flows between the inlet means (14,114) and outlet means (16,116) is a heat exchanger of the shell and tube type, or a heater element powered by electricity or an exothermic chemical reaction.

4. A heating device (10,36,110) as claimed in any preceding claim, wherein the inlet means (14,114) and outlet means (16,116) are connected by a heated passageway (120).

5. A heating device (10,36,110) as claimed in any preceding claim, wherein the inlet means (14,114) and outlet means (16,116) are connected by a helical path (124).

6. A heating device (10,36,110) as claimed in claim 5 when dependant on claim 4, wherein the helical path (124) is within the heated passageway (120) and releasably connected to the heated passageway (120).

7. A heating device (10,36,110) as claimed in claim 6, wherein the helical path (124) is disposable.

8. A heating device (10,36,110) as claimed in any preceding claim, wherein the device (10,36,110) includes a fluid sensor that activates the heating means, in use, when it senses the presence of a flow of fluid between the inlet means (14,114) and the outlet means (16,116).

9. A heating device (10,36,110) as claimed in any preceding claim, wherein the device (10,36,110) includes at least one thermistor (130,134,136) to measure the temperature of the liquid feed in at least one of the inlet means (14,114), between the inlet means (14,114) and outlet means (16,116), or at the outlet means (16,116).

10. A heating device (10,36,110) as claimed in only one of claims 4 to 9 where the heated passageway (118) is heated by a heated sheath (120) which includes at least one thermistor (130) embedded in said sheath to measure its temperature.

11. A heating device (10,36,110) as claimed in any preceding claim, wherein the device (10,36,110) includes a thermostat to ensure the temperature of the feed does not exceed a predetermined temperature.

12. A heating device (10,36,110) as claimed in any preceding claim, wherein the device (10,36,110) includes a bimetallic strip.

13. A heating device (10,36,110) as claimed in any preceding claim, wherein the device (10,36,110) includes a tilt switch to switch the device off after a set time of being horizontal.

14. A heating device (10,36,110) as claimed in any preceding claim, wherein the heated passageway (120) includes a vent to prevent a vacuum being formed within the heated passageway (120) and to ensure a steady flow of liquid through the heated passageway (120).

15. A heating device (10,36,110) as claimed in any preceding claim which further comprises a LED (144) to indicate operation and provide illumination in use.

16. A drinking system for an infant, to provide an infant with a liquid feed at an acceptable consumption temperature, the feeding system including:
a vessel (38, 160) suitable, in use, for storing a liquid feed at a storage temperature; and
a heating device (10,36,110) as claimed in any of claims 1 to 15,
whereby, in use, the liquid feed is drawn from the vessel (38,160), through the device (10,36,110), to an infant, and the temperature of the liquid feed is elevated as it passes between the inlet means (14,114) and outlet means (16,116) of the device (10,36,110), from the storage temperature to an acceptable feeding temperature and is prevented by said non-return means (64, 146) from returning to said vessel.

## Patentansprüche

1. Wärmvorrichtung (10, 36, 110), die für eine Verwendung bei einem Trinkbehälter angepasst ist, der für die Aufnahme eines Fluids geeignet ist, beispielsweise einer Saugflasche für Säuglinge, wobei die Vorrichtung (10, 36, 110) umfasst:
Mittel (12, 112) zum lösbaren Verbinden der Vorrichtung (10, 110) mit einem Behälter, um so damit in Fluidverbindung zu sein;
Eintrittsmittel (14, 114) zum Aufnehmen eines Fluidstromes aus einem Behälter bei Benutzung;
Austrittsmittel (16, 116), die bei Benutzung gestatten, dass ein Fluidstrom die Vorrichtung (10, 36, 110) verlässt, wobei die Austrittsmittel (16, 116) mit den Eintrittsmitteln (14, 114) in Fluidverbindung sind; und
Mittel (18, 122) für das Erwärmen eines Fluids bei Benutzung der Vorrichtung (10, 36, 110), während es zwischen den Eintrittsmitteln (14, 114) und den Austrittsmitteln (16, 116) strömt;
**dadurch gekennzeichnet, dass** die Vorrichtung Rückschlagmittel (64, 146) aufweist, die ausgebildet und angeordnet sind, um zu verhindern, dass das durch die Eintrittsmittel (14, 114) gelangt Fluid zu einem Behälter zurückkehrt,
wobei bei Benutzung ein Fluidstrom aus einem Behälter durch die Vorrichtung (10, 36, 110) von den Eintrittsmitteln (14, 114) zu den Austrittsmitteln (16, 116) strömt und die Vorrichtung (10, 36, 110) durch die Austrittsmittel (16, 116) bei einer erhöhten Temperatur verlässt und mittels der Rückschlagmittel (64, 146) eine Rückführung zu einem Behälter verhindert wird.

2. Wärmvorrichtung (10, 36, 110) nach Anspruch 1, bei der die Vorrichtung (10, 36, 110) Rückschlagmittel an den Austrittsmitteln (16, 116) umfasst, um zu verhindern, dass das Fluid zurückkehrt und mit den Mitteln (18, 122) für das Erwärmen in Berührung kommt.

3. Wärmvorrichtung (10, 36, 110) nach einem der vorhergehenden Ansprüche, bei der die Mittel (18, 122) für das Erwärmen des Fluidstromes, während er zwischen den Eintrittsmitteln (14, 114) und den Austrittsmitteln (16, 116) strömt, ein Röhrenwärmeaustauscher oder ein Heizelement sind, angetrieben durch Elektrizität oder eine exotherme chemische Reaktion.

4. Wärmvorrichtung (10, 36, 110) nach einem der vorhergehenden Ansprüche, bei der die Eintrittsmittel (14, 114) und die Austrittsmittel (16, 116) mittels eines erwärmten Durchganges (120) verbunden sind.

5. Wärmvorrichtung (10, 36, 110) nach einem der vorhergehenden Ansprüche, bei der die Eintrittsmittel (14, 114) und die Austrittsmittel (16, 116) mittels einer wendelförmigen Strecke (124) verbunden sind.

6. Wärmvorrichtung (10, 36, 110) nach Anspruch 5, wenn vom Anspruch 4 abhängig, bei der die wendelförmige Strecke (124) innerhalb des erwärmten Durchganges (120) ist und lösbar mit dem erwärmten Durchgang (120) verbunden ist.

7. Wärmvorrichtung (10, 36, 110) nach Anspruch 6, bei der die wendelförmige Strecke (124) wegwerfbar ist.

8. Wärmvorrichtung (10, 36, 110) nach einem der vorhergehenden Ansprüche, bei der die Vorrichtung (10, 36, 110) einen Fluidsensor umfasst, der die Mittel für das Erwärmen bei Benutzung aktiviert, wenn er das Vorhandensein eines Fluidstromes zwischen den Eintrittsmitteln (14, 114) und den Austrittsmitteln (16, 116) wahmimmt.

9. Wärmvorrichtung (10, 36, 110) nach einem der vorhergehenden Ansprüche, bei der die Vorrichtung (10, 36, 110) mindestens einen Thennistor (130, 134, 13G) umfasst, um die Temperatur der flüssigen Nahrung in mindestens einem Eintrittsmittel (14, 114), zwischen Eintrittsmitteln (14, 114) und Austrittsmitteln (16, 116) oder an den Austrittsmitteln (16, 116) zu messen.

10. Wärmvorrichtung (10, 36, 110) nach nur einem der Ansprüche 4 bis 9, bei der der erwärmte Durchgang (118) durch eine erwärmte Hülle (120) erwärmt wird, die mindestens einen Thermistor (130) umfasst, der in der Hülle eingebettet ist, um die Temperatur davon zu messen.

11. Wärmvorrichtung (10, 36, 110) nach einem der vorhergehenden Ansprüche, bei der die Vorrichtung (10, 36, 110) einen Thermostat umfasst, um zu sichern, dass die Temperatur der Nahrung eine vorgegebene Temperatur nicht übersteigt.

12. Wärmvorrichtung (10, 36, 110) nach einem der vorhergehenden Ansprüche, bei der die Vorrichtung (10, 36,110) einen Bimetallstreifen umfasst.

13. Wärmvorrichtung (10, 36, 110) nach einem der vorhergehenden Ansprüche, bei der die Vorrichtung (10, 36, 110) einen Kippschalter umfasst, um die Vorrichtung nach einer eingestellten Zeit, in der sie horizontal ist, abzuschalten.

14. Warmvorrichtung (10, 36, 110) nach einem der vorhergehenden Ansprüche, bei der der erwärmte Durchgang (120) eine Entlüftung umfasst, um zu verhindern, dass ein Vakuum innerhalb des erwärmten Durchganges (120) gebildet wird, und um einen beständigen Flüssigkeitsstrom durch den erwärmten Durchgang (120) zu sichern.

15. Wärmvorrichtung (10, 36, 110) nach einem der vorhergehenden Ansprüche, die außerdem eine LED (144) aufweist, um den Betrieb anzuzeigen, und um bei Benutzung eine Beleuchtung zu bewirken.

16. Trinksystem für einen Säugling, um einem Säugling eine flüssige Nahrung mit einer akzeptablen Verzehrtemperatur bereitzustellen, wobei das Zuführsystem umfasst:
einen Behälter (38, 160), der bei Benutzung für die Aufbewahrung einer flüssigen Nahrung bei einer Aufbewahrungstemperatur geeignet ist; und
eine Wärmvorrichtung (10, 36, 110) nach einem der Ansprüche 1 bis 15,
wobei bei Benutzung die flüssige Nahrung aus dem Behälter (38, 160) durch die Vorrichtung (10, 36, 110) von einem Säugling angesaugt wird, und wobei die Temperatur der flüssigen Nahrung, während sie zwischen den Eintrittsmitteln (14, 114) und den Austrittsmitteln (16, 116) der Vorrichtung (10, 36, 110) hindurchgeht, von der Aufbewahrungstemperatur auf eine akzeptable Zuführtemperatur erhöht wird, und wobei durch die Rückschlagmittel (64, 146) eine Rückführung zum Behälter verhindert wird.

## Revendications

1. Dispositif de chauffage (10, 36, 110) adapté à être utilisé avec un récipient à boire adéquat pour contenir un fluide, par exemple un biberon pour bébé, le dispositif (10, 36, 110) englobant :
des moyens (12, 112) pour connecter de manière amovible le dispositif (10, 110) à un récipient, de sorte à être en communication de fluide avec celui-ci ;
des moyens d'entrée (14, 114) pour recevoir en utilisation un écoulement de fluide provenant du récipient ;
des moyens de sortie (16, 116) destinés à permettre en utilisation la sortie d'un écoulement de fluide du dispositif (10, 36, 110), les moyens de sortie (16, 116) étant en communication de fluide avec les moyens d'entrée (14, 114) ; et
des moyens (18, 122) pour chauffer un fluide, lors de l'utilisation du dispositif (10, 36, 110), lors de son écoulement entre les moyens d'entrée (14, 114) et les moyens de sortie (16, 116) ; **caractérisé en ce que** ledit dispositif comrpend :
des moyens de non-retour (64, 146) fortnés et agencés de sorte à empêcher un retour du fluide ayant traversé les moyens d'entrée (14, 114) vers un dit récipient ;
un écoulement de fluide provenant d'un récipient s'écoulant ainsi en utilisation à travers le dispositif (10, 36, 110), des moyens d'entrée (14, 114) vers les moyens de sortie (16, 116) et sortant du dispositif (10, 36, 110) à travers les moyens de sortie (16, 116) à une température élevée, lesdits moyens de non-retour (64, 1436) empêchant son retour vers un dit récipient.

2. Dispositif de chauffage (10, 36, 110) selon la revendication 1, dans lequel le dispositif (10, 36, 110) englobe des moyens de non-retour sur les moyens de sortie (16, 116) pour empêcher un retour du fluide et son entrée en contact avec les moyens de chauffage (18, 122).

3. Dispositif de chauffage (10, 36, 110) selon l'une quelconque des revendications précédentes, dans lequel les moyens de chauffage (18, 122) d'un dit écoulement de fluide lors de son écoulement entre les moyens d'entrée (14, 114) et les moyens de sortie (16, 116) sont constitués par un échangeur de chaleur à calandre tubulaire, ou par un élément de chauffage actionné électriquement ou par une réaction chimique exothermique.

4. Dispositif de chauffage (10, 36, 110) selon l'une quelconque des revendications précédentes, dans lequel les moyens d'entrée (14, 114) et les moyens de sortie (16, 116) sont connectés par un passage chauffé (120).

5. Dispositif de chauffage (10, 36, 110) selon l'une quelconque des revendications précédentes, dans lequel les moyens d'entrée (14, 114) et les moyens de sortie (16, 116) sont connectés par un chemin hélicoïdal (124).

6. Dispositif de chauffage (10, 36, 110) selon la revendication 5, dépendant de la revendication 4, dans lequel le chemin hélicoïdal (124) est situé dans le passage chauffé (120) et est connecté de manière amovible au passage chauffé (120).

7. Dispositif de chauffage (10, 36, 110) selon la revendication 5, dans lequel le chemin hélicoïdal (124) est jetable.

8. Dispositif de chauffage (10, 36, 110) selon l'une quelconque des revendications précédentes, dans lequel le dispositif (10, 36, 110) englobe un captcur de fluide, activant les moyens de chauffage en utilisation lorsqu'il détecte la présence d'un écoulement de fluide entre les moyens d'entrée (14, 114) et les moyens de sortie (16, 116).

9. Dispositif de chauffage (10, 36, 110) selon l'une quelconque des revendications précédentes, dans lequel le dispositif (10, 36, 110) englobe au moins une thermistance (130, 134, 136) pour mesurer la température du liquide alimenté dans au moins un des moyens d'entrée (14, 114), entre les moyens d'entrée (14, 114) et les moyens de sortie (16, 116) ou au niveau des moyens de sortie (16, 116).

10. Dispositif de chauffage (10, 36, 110) selon l'une quelconque des revendications 4 à 9, dans lequel le passage chauffé (118) est chauffé par une gaine chauffée (120) englobant au moins une thermistance (130) noyée dans ladite gaine pour mesurer sa température.

11. Dispositif de chauffage (10, 36, 110) selon l'une quelconque des revendications précédentes, dans lequel le dispositif (10, 36, 110) englobe un thermostat pour empêcher que la température de l'alimentation ne dépasse une température prédéterminée.

12. Dispositif de chauffage (10, 36, 110) selon l'une quelconque des revendications précédentes, dans lequel le dispositif (10, 36, 110) englobe une bande bimétallique.

13. Dispositif de chauffage (10, 36, 110) selon l'une quelconque des revendications précédentes, dans lequel le dispositif (10, 36, 110) englobe un interrupteur basculant pour débrancher le dispositif après une période de temps déterminée de sa position horizontale.

14. Dispositif de chauffage (10, 36, 110) selon l'une quelconque des revendications précédentes, dans lequel le passage chauffé (120) englobe un évent pour empêcher l'établissement d'un vide entre le passage chauffé (120) et pour assurer un écoulement constant du liquide à travers le passage chauffé.

15. Dispositif de chauffage (10, 36, 110) selon l'une quelconque des revendications précédentes, comprenant en outre un LED (144) pour indiquer le fonctionnement et assurer un éclairage en utilisation.

16. Système de boisson pour un bébé, pour fournir à un bébé une alimentation liquide à une température de consomamtion acceptable, le système d'alimentation englobant :
un récipient (38, 160) adéquat pour stocker en utilisation une alimentation liquide à une température de stockage ; et
un dispositif de chauffage (10, 36, 110) selon l'une quelconque des revendications 1à15;
le liquide d'alimentation étant ainsi en utilisation aspiré à partir du récipient (38, 160), à travers le dispositif (10, 3G, 110), vers un bébé, et la température de l'alimentation liquide étant accrue lors de son passage entre les moyens d'entrée (14, 114) et les moyens de sortie (16, 116) du dispositif (10, 36, 110), de la température de stockage à une température d'alimentation acceptable, son retour vers ledit récipient étant empêche par ledit moyen de non-retour (64, 146).
